# EUROPEAN PATENT APPLICATION

(11) **EP 4 834 977 A1**
(43) Date of publication of application: **04.11.2026**
(21) Application number: 24912606.1
(22) Date of filing: 19.12.2024
(51) Int. Cl.: C08G 77/50, C08G 77/18, C08L 83/06, C08L 83/14, C09D 183/06, C09D 183/14, C09K 3/18

(54) **REACTIVE SILICON GROUP-CONTAINING ORGANOPOLYSILOXANE AND SURFACE TREATMENT AGENT**

(30) Priority: 28.12.2023 JP 2023222076
(71) Applicant: SHIN-ETSU CHEMICAL CO., LTD., Tokyo 100-0005 (JP)
(72) Inventor: TAKAGI Kazunori, Annaka-shi, Gunma 379-0224 (JP)
(74) Representative: Mewburn Ellis LLP
(86) International application number: PCT/JP2024/044949
(87) International publication number: WO 2025/142717

(57) **Abstract**

This reactive silicon group-containing organopolysiloxane, which contains, per molecule thereof, one group represented by structural formula (1) and bonded to a silicon atom at the end of a linear organopolysiloxane, forms a film having excellent water repellency, water sliding properties, and durability. 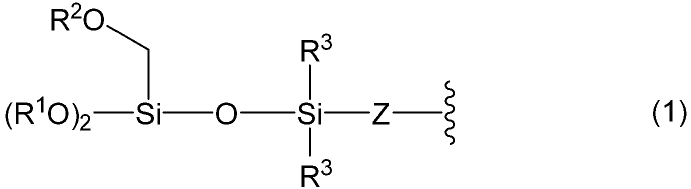 (In the formula, R¹ and R² each independently represent a hydrogen atom, a C1-C10 aliphatic saturated hydrocarbon group, or a C6-C10 aryl group, R³s each independently represent a C1-C10 aliphatic saturated hydrocarbon group or a C6-C10 aryl group, Z represents an oxygen atom, a C2-C12 alkylene group, or a C8-C12 alkylene arylene group, and a line with a wavy line represents a bond.)

## Description

### TECHNICAL FIELD

The present invention relates to a reactive silicon group-containing organopolysiloxane and a surface treatment agent, and more specifically, an organopolysiloxane having, as a reactive silicon group, an organosilicon group capable of forming a siloxane bond through a reaction, and a cured product containing the same.

### BACKGROUND ART

In the related art, surface treatment agents containing a fluoroalkylsilane or an amino-modified polysiloxane have been proposed as water-repellent treatment agents for glass (Patent documents 1 to 6).

Although a water-repellent film formed from such a surface treatment agent has high water repellency, the film surface is insufficient in water-droplet sliding property. For example, when such a film is to be applied to window glass of automobiles, improvement in water sliding property is needed in order to ensure a favorable view under rainy conditions.

In this regard, as a composition for giving a water-repellent coating having satisfactory water repellency and water sliding property, Patent Document 7 has proposed a surface treatment agent containing a linear organopolysiloxane having a reactive group at one terminal and an alkoxy group-containing organosilicon compound.

However, a water-repellent film formed from the surface treatment agent disclosed in Patent Document 7 is insufficient in durability against an impact or abrasion, which makes it difficult to maintain the water repellency.

### PRIOR ART DOCUMENTS

### PATENT DOCUMENTS

Patent Document 1: JP-A 2012-224668
Patent Document 2: JP-A 2009-137775
Patent Document 3: JP-A 2009-173491
Patent Document 4: JP-A H10-102046
Patent Document 5: JP-A 2003-160361
Patent Document 6: JP-A H09-176622
Patent Document 7: JP-A H11-315276

### SUMMARY OF INVENTION

### TECHNICAL PROBLEM

The present invention has been made in view of the above circumstances, and an object of the present invention is to provide a reactive silicon group-containing organopolysiloxane capable of forming a film having high water repellency, water sliding property, and durability, and a surface treatment agent containing the organopolysiloxane.

### SOLUTION TO PROBLEM

As a result of an intensive study for solving the above-described problems, the present inventor has found that a linear organopolysiloxane having, as a reactive silicon group, a silyl group that is provided at one terminal of the molecular chain and has an organoxymethyl group and two organoxy groups gives a film having high water repellency, water sliding property, and durability, and has completed the present invention.

That is, the present invention provides:
1. A reactive silicon group-containing organopolysiloxane comprising, per molecule, one group that is bonded to a terminal silicon atom of a linear organopolysiloxane and that is represented by the following structural formula (1): 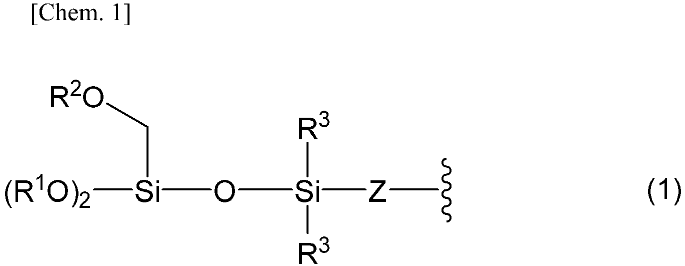 (wherein R¹ and R² each independently represent a hydrogen atom, a saturated aliphatic hydrocarbon group having 1 to 10 carbon atoms, or an aryl group having 6 to 10 carbon atoms, each R³ independently represents a saturated aliphatic hydrocarbon group having 1 to 10 carbon atoms or an aryl group having 6 to 10 carbon atoms, Z represents an oxygen atom, an alkylene group having 2 to 12 carbon atoms, or an alkylenearylene group having 8 to 12 carbon atoms, and a line provided with a wavy line represents a bonding site);
2. The reactive silicon group-containing organopolysiloxane according to 1, being represented by the following formula (2): 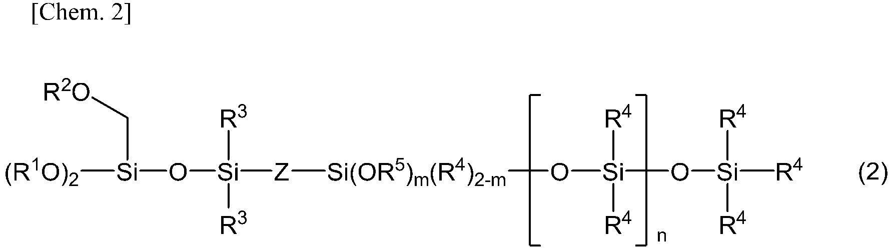 (wherein each R⁴ independently represents a saturated aliphatic hydrocarbon group having 1 to 10 carbon atoms or an aryl group having 6 to 10 carbon atoms, each R⁵ independently represents a hydrogen atom, a saturated aliphatic hydrocarbon group having 1 to 10 carbon atoms, or an aryl group having 6 to 10 carbon atoms, R¹, R², R³, and Z are as defined above, m is an integer of 0 to 2, and n is an integer of 1 to 100);
3. A surface treatment agent comprising the reactive silicon group-containing organopolysiloxane according to 1 or 2, a hydrolytic condensate of the organopolysiloxane, or both the organopolysiloxane and the hydrolytic condensate;
4. The surface treatment agent according to 3, further comprising an acid catalyst; and
5. An article comprising the surface treatment agent according to 3 adhered thereto.

### ADVANTAGEOUS EFFECTS OF INVENTION

The reactive silicon group-containing organopolysiloxane of the present invention is capable of forming a film having high water repellency, water sliding property, and durability, and therefore can be suitably used as a surface treatment agent to be used for water-repellent treatment for fiber products, and glass and vehicle bodies of transport equipment.

### DESCRIPTION OF EMBODIMENTS

The present invention will be specifically described below.

The reactive silicon group-containing organopolysiloxane of the present invention contains, per molecule, one group that is bonded to a terminal silicon atom of a linear organopolysiloxane and that is represented by the following structural formula (1):

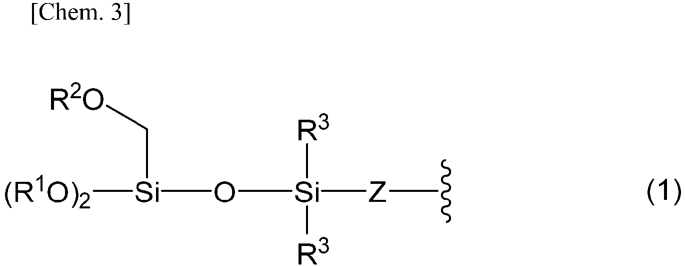

In the formula (1), R¹ and R² each independently represent a hydrogen atom, a saturated aliphatic hydrocarbon group having 1 to 10 carbon atoms, or an aryl group having 6 to 10 carbon atoms, and each R³ independently represents a saturated aliphatic hydrocarbon group having 1 to 10 carbon atoms or an aryl group having 6 to 10 carbon atoms.

The saturated aliphatic hydrocarbon group having 1 to 10 carbon atoms for R¹, R², and R³ may be linear, cyclic, or branched, and specific examples thereof include linear or branched alkyl groups such as methyl, ethyl, n-propyl, i-propyl, n-butyl, s-butyl, t-butyl, n-pentyl, neopentyl, n-hexyl, n-heptyl, n-octyl, n-nonyl, and n-decyl; and cycloalkyl groups such as cyclopropyl, cyclobutyl, cyclopentyl, cyclohexyl, cycloheptyl, and cyclooctyl.

Specific examples of the aryl group having 6 to 10 carbon atoms for R¹, R², and R³ include phenyl, tolyl, xylyl, α-naphthyl, and β-naphthyl.

Some or all of hydrogen atoms of such groups may be substituted with a halogen atom such as F, Cl, or Br or a cyano group, and specific examples thereof include a 3-chloropropyl group, a 3,3,3-trifluoropropyl group, and a 2-cyanoethyl group.

Of these, each of R¹, R², and R³ is preferably a methyl group, an ethyl group, or a phenyl group, and more preferably a methyl group from the viewpoints of curability, productivity, and cost.

In the formula (1), the alkylene group having 2 to 12 carbon atoms for Z is preferably one having 2 to 8 carbon atoms, and the alkylenearylene group having 8 to 12 carbon atoms is preferably one having 8 to 10 carbon atoms. Preferable examples of Z include those represented by the following structural formulae, but are not limited thereto. 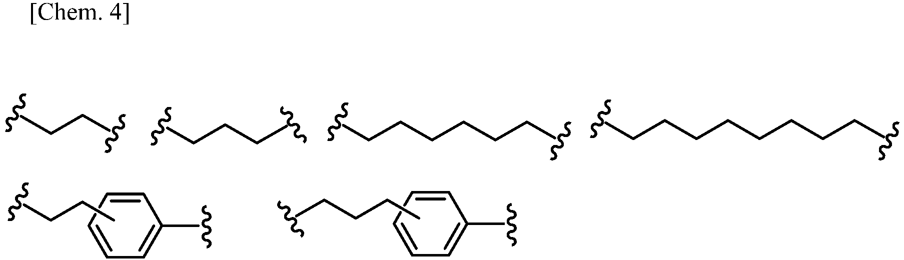 (In the formulae, each line provided with a wavy line represents a bonding site.)

The siloxane structural unit (M unit, D unit, T unit, or Q unit) of the reactive silicon group-containing organopolysiloxane of the present invention is not limited, and the siloxane skeleton may have a linear structure, a branched structure, a cyclic structure, or a crosslinked structure. From the viewpoints of mechanical characteristics of a resulting film and storage stability of the surface treatment agent, a linear structure is preferred.

The reactive silicon group-containing organopolysiloxane of the present invention is preferably one represented by the following formula (2). 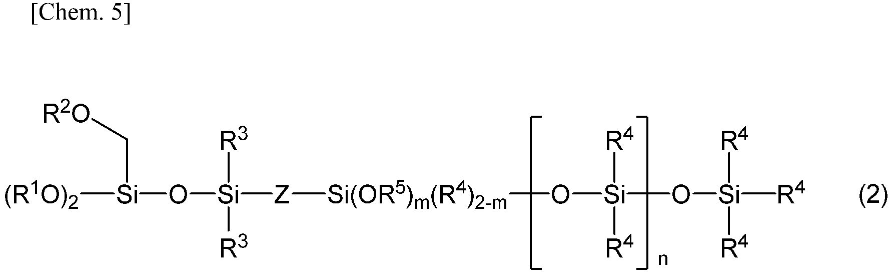 (In the formula, R¹, R², R³, and Z are as defined above.)

In the formula (2), each R⁴ independently represents a saturated aliphatic hydrocarbon group having 1 to 10 carbon atoms or an aryl group having 6 to 10 carbon atoms, and each R⁵ independently represents a hydrogen atom, a saturated aliphatic hydrocarbon group having 1 to 10 carbon atoms, or an aryl group having 6 to 10 carbon atoms.

Examples of the saturated aliphatic hydrocarbon group having 1 to 10 carbon atoms and the aryl group having 6 to 10 carbon atoms for R⁴ and R⁵ are the same as those exemplified for R¹, R², and R³. Of these, a methyl group, an ethyl group, and a phenyl group are preferred, and a methyl group is more preferred from the viewpoints of curability, productivity, and cost.

In the formula (2), m is an integer of 0 to 2, and is preferably 2 from the viewpoint of improving durability of the film.

n is an integer of 1 to 100, and is preferably an integer of 5 to 50 from the viewpoints of improving water repellency and water sliding property of the film. Note that when n is greater than 100, the durability of the resulting film may decrease.

Specific examples of the reactive silicon group-containing organopolysiloxane of the present invention include, but are not limited to, the following compounds.

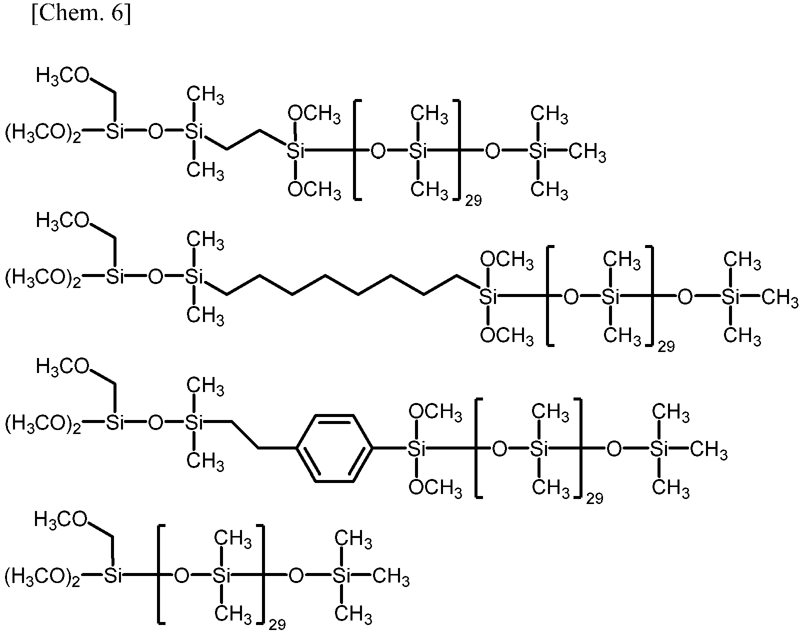

The reactive silicon group-containing organopolysiloxane in which Z in the above formula (1) is an oxygen atom can be obtained by the following procedure. That is, a triorganosilanol compound such as trimethylsilanol is used as an initiator, and a cyclotrisiloxane compound such as hexamethylcyclotrisiloxane is subjected to ring-opening polymerization in the presence of a pentacoordinate silicon catalyst, and then an organoxysilane represented by the following formula (6) is allowed to react therewith to effect end-capping.

The reactive silicon group-containing organopolysiloxane in which Z in the above formula (1) is an alkylene group having 2 to 12 carbon atoms or an alkylenearylene group having 8 to 12 carbon atoms can be obtained by the following procedure. That is, a linear organopolysiloxane having an alkenyl group at one terminal (hereinafter also referred to as "one-terminal alkenyl group-containing linear organopolysiloxane") and a disiloxane compound represented by the following formula (3) are subjected to a hydrosilylation reaction in the presence of a platinum group metal catalyst in the atmosphere or in an inert gas such as nitrogen.

The one-terminal alkenyl group-containing linear organopolysiloxane is preferably one represented by the following formula (4).

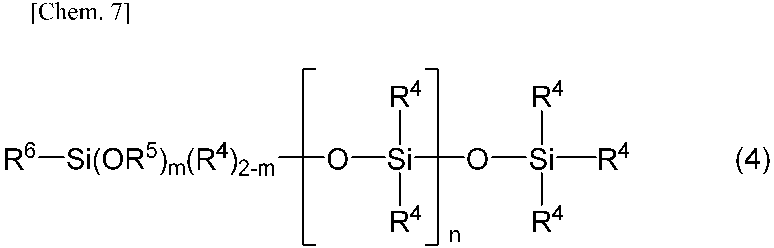

### (In the formula, R⁴, R⁵, m, and n are as defined above.)

In the formula (4), R⁶ represents an alkenyl group having 2 to 12 carbon atoms or an alkenylaryl group having 8 to 12 carbon atoms.

The alkenyl group having 2 to 12 carbon atoms for R⁶ is preferably one having 2 to 8 carbon atoms, and examples thereof include a vinyl group, an allyl group, a 3-butenyl group, a 5-hexenyl group, and a 7-octenyl group. The alkenylaryl group having 8 to 12 carbon atoms is preferably one having 8 to 10 carbon atoms, and examples thereof include a p-vinylphenyl group and a p-allylphenyl group. 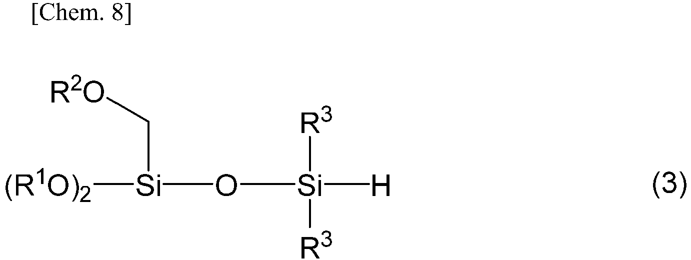 (In the formula, R¹, R², and R³ are as defined above.)

Specific examples of the disiloxane compound represented by the above formula (3) include, but are not limited to, those represented by the following structural formulae. Of these, a disiloxane compound represented by the formula (5) is preferred.

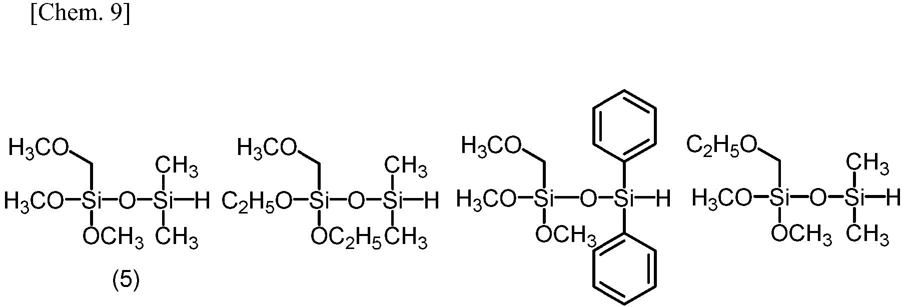

The disiloxane compound represented by the above formula (3) is obtained by, for example, subjecting an organoxysilane represented by the following formula (6) and a disiloxane compound represented by the following formula (7) to an equilibration reaction in the presence of an acid and water. 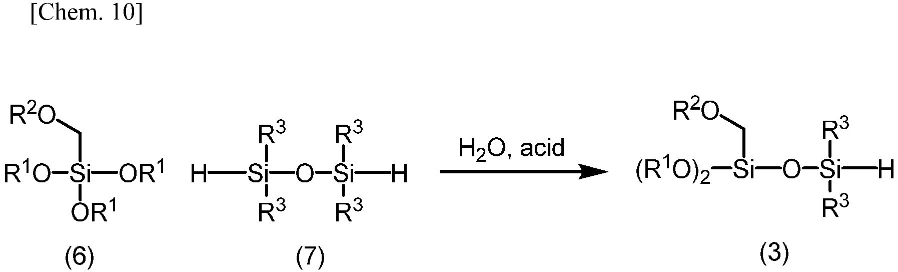 (In the formula, R¹, R², and R³ are as defined above.)

In order to suppress byproducts during the hydrosilylation reaction, and in consideration of storage stability of the composition and mechanical characteristics of a cured product, the reaction ratio of the disiloxane compound represented by the above formula (3) to the one-terminal alkenyl group-containing linear organopolysiloxane is preferably as follows. That is, the number of hydrosilyl groups of the disiloxane compound represented by the above formula (3) is preferably 0.8 to 2.5, more preferably 0.9 to 2.0 per alkenyl group in the alkenyl group-containing organopolysiloxane.

The platinum group metal catalyst used for the hydrosilylation reaction is not limited, and specific examples thereof include chloroplatinic acid, an alcoholic solution of chloroplatinic acid, a toluene or xylene solution of a platinum-1,3-divinyl-1,1,3,3-tetramethyldisiloxane complex, tetrakis(triphenylphosphine)platinum, dichlorobis(triphenylphosphine)platinum, dichlorobis(acetonitrile)platinum, dichlorobis(benzonitrile)platinum, dichloro(cyclooctadiene)platinum, and supported catalysts such as platinum-carbon, platinum-alumina, and platinum-silica.

Of these, from the viewpoint of selectivity in hydrosilylation, a zero-valent platinum complex is preferred, and the toluene or xylene solution of a platinum-1,3-divinyl-1,1,3,3-tetramethyldisiloxane complex is more preferred.

The amount of the platinum group metal catalyst used is not limited. From the viewpoints of, for example, reactivity and productivity, the amount is preferably 0.1 to 1,000 ppm, more preferably 0.3 to 100 ppm, in terms of the weight of the platinum group metal relative to the total weight of the one-terminal alkenyl group-containing linear organopolysiloxane and the disiloxane compound represented by the above formula (3).

The hydrosilylation reaction may be performed without a solvent, but a solvent may be used as necessary without inhibiting the reaction.

Specific examples of the solvent that can be used include hydrocarbon solvents such as pentane, hexane, cyclohexane, heptane, isooctane, benzene, toluene, and xylene; ether solvents such as diethyl ether, tetrahydrofuran, and dioxane; ester solvents such as ethyl acetate and butyl acetate; aprotic polar solvents such as N,N-dimethylformamide; and chlorinated hydrocarbon solvents such as dichloromethane and chloroform. These solvents may be used alone or in combination.

The reaction temperature in the hydrosilylation is not limited, and is preferably 0 to 200°C, more preferably 40 to 110°C, still more preferably 60 to 100°C. When a solvent is used, the reaction is preferably performed at a temperature in a range from 0°C to the boiling point of the solvent. The reaction time is not limited, and is typically about 1 to 60 hours, preferably 1 to 24 hours.

The surface treatment agent of the present invention contains the above-described reactive silicon group-containing organopolysiloxane, a hydrolytic condensate thereof, or both the reactive silicon group-containing organopolysiloxane and the hydrolytic condensate.

The surface treatment agent of the present invention may be mixed with a solvent before use according to the application or workability. Specific examples of an organic solvent that can be used include esters such as ethyl acetate, propyl acetate, isopropyl acetate, butyl acetate, and isobutyl acetate; hydrocarbons such as hexane, cyclohexane, heptane, octane, decane, dodecane, toluene, and xylene; halogenated hydrocarbons such as dichloromethane, 1,1-dichloroethane, and 1,2-dichloroethane; ketones such as methyl ethyl ketone, 2-pentanone, and methyl isobutyl ketone; ethers such as diethylene glycol monomethyl ether and dipropylene glycol monomethyl ether; and alcohols such as ethanol, 1-propanol, 2-propanol, 1-butanol, 2-butanol, and isobutyl alcohol. These solvents may be used alone or in combination.

The concentration of the reactive silicon group-containing organopolysiloxane of the present invention contained in the surface treatment agent is not limited, and is preferably 0.1 to 20 wt%, more preferably 0.5 to 10 wt%, still more preferably 0.5 to 5.0 wt% relative to the whole amount of the surface treatment agent. Within this range, the coating can have uniform and high water repellency and water sliding property.

In addition, the surface treatment agent of the present invention may contain a hydrolysis catalyst for the purpose of facilitating reactions between water and hydrolyzable groups included in the reactive silicon group-containing organopolysiloxane, thereby facilitating formation of silanol groups.

Specific examples of the hydrolysis catalyst include organic acids such as acetic acid, formic acid, methanesulfonic acid, and p-toluenesulfonic acid; and inorganic acids such as hydrochloric acid, nitric acid, and sulfuric acid. These catalysts may be used alone or in combination.

Of these, methanesulfonic acid, p-toluenesulfonic acid, and sulfuric acid are preferred, and sulfuric acid is particularly preferred.

The amount of the hydrolysis catalyst added is preferably 0.1 to 15.0 wt%, more preferably 1.0 to 10.0 wt% relative to the amount of the reactive silicon group-containing organopolysiloxane.

Furthermore, the surface treatment agent of the present invention may contain a curing catalyst.

Specific examples of the curing catalyst include titanium catalysts such as titanium tetraisopropoxide, titanium tetra-n-butoxide, titanium tetra-2-ethylhexoxide, and titanium tetraacetylacetonate; tin catalysts such as dibutyltin dilaurate, dibutyltin diacetate, and dioctyltin diacetate; aluminum catalysts such as aluminum sec-butoxide, aluminum tris(acetylacetonate), aluminum bis(ethyl acetoacetate) monoacetylacetonate, and aluminum tris(ethyl acetoacetate); and zirconium catalysts such as n-propyl zirconate, n-butyl zirconate, zirconium tetraacetylacetonate, zirconium tetraacetylacetonate, zirconium monoacetylacetonate, and zirconium tetraacetylacetonate. The amount of the curing catalyst added is preferably 0.1 to 15.0 wt%, more preferably 1.0 to 10.0 wt% relative to the amount of the reactive silicon group-containing organopolysiloxane.

The surface treatment agent of the present invention may further contain an organosilicon compound having a hydroxy group or a hydrolyzable group bonded to a Si atom, other than the reactive silicon group-containing organopolysiloxane of the present invention, a hydrolytic condensate thereof, or a mixture thereof.

Examples of the hydrolyzable group include an alkoxy group, a halogen atom, an acyloxy group, and an isocyanato group.

Examples of the other organosilicon compound include, as silane compounds having an alkoxysilyl group, tetramethoxysilane, tetraethoxysilane, methyltrimethoxysilane, methyltriethoxysilane, dimethyldimethoxysilane, dimethyldiethoxysilane, phenyltrimethoxysilane, phenyltriethoxysilane, n-propyltrimethoxysilane, n-propyltriethoxysilane, diphenyldimethoxysilane, hexyltrimethoxysilane, hexyltriethoxysilane, decyltrimethoxysilane, trifluoropropyltrimethoxysilane, hexamethyldisilazane, vinyltrimethoxysilane, vinyltriethoxysilane, 3-glycidoxypropyltrimethoxysilane, 3-methacryloxypropyltrimethoxysilane, 3-acryloxypropyltrimethoxysilane, 3-aminopropyltrimethoxysilane, 3-ureidopropyltriethoxysilane, 3-mercaptopropyltrimethoxysilane, 3-mercaptopropylmethyldimethoxysilane, bis(triethoxysilylpropyl)tetrasulfide, and 3-isocyanatopropyltriethoxysilane; and, as silane compounds having a halogenated silyl group, methyltrichlorosilane, ethyltrichlorosilane, dimethyldichlorosilane, trimethylchlorosilane, phenyltrichlorosilane, diphenyldichlorosilane, and trifluoroethyltrichlorosilane.

The amount of the other organosilicon compound added is not limited as long as water repellency and water sliding property of a resulting cured film are not affected. The amount is preferably 20 wt% or less relative to the amount of the reactive silicon group-containing organopolysiloxane of the present invention.

The surface treatment agent of the present invention may further contain various additives in addition to the above-described components.

Examples of the additives include metal oxides, resins, dyes, pigments, ultraviolet absorbers, and antioxidants, with specific examples including silica sol, titania sol, and alumina sol.

The amount of the additives is not limited as long as water repellency and water sliding property of a resulting cured film are not affected. The amount is preferably 30 wt% or less relative to the amount of the reactive silicon group-containing organopolysiloxane of the present invention.

By applying the above-described surface treatment agent of the present invention onto a substrate and drying the same, a water-repellent film can be formed on the substrate.

The material and shape of the substrate are not limited. Specific examples include substrates made of organic resins such as epoxy resins, phenolic resins, polyimide resins, polycarbonate resins such as polycarbonates and polycarbonate blends, acrylic resins such as poly(methyl methacrylate), polyester resins such as poly(ethylene terephthalate), poly(butylene terephthalate), and unsaturated polyester resins, polyamide resins, acrylonitrile-styrene copolymer resins, styrene-acrylonitrile-butadiene copolymer resins, polyvinyl chloride resins, polystyrene resins, blends of polystyrene and polyphenylene ether, cellulose acetate butyrate, and polyethylene resins; metal substrates such as iron plates, copper plates, and steel plates; surfaces coated with paints; glass; ceramics; concrete; slate boards; textiles; wood, stone, tiles, inorganic fillers such as (hollow) silica, titania, zirconia, and alumina; and glass fibers and glass fiber products such as glass cloth, glass tape, glass mats, and glass paper.

The method of applying the surface treatment agent is not limited, and specifically, can be appropriately selected from known methods including spray coating, spin coating, dip coating, roller coating, brush coating, bar coating, and flow coating. After the surface treatment agent is applied onto the substrate, the coated surface is preferably wiped with water.

Drying after coating may be performed by either natural drying or heat drying, and is preferably performed at a temperature in the range of 5 to 150°C, more preferably around room temperature (5 to 35°C). At a temperature of 5°C or higher, the reaction rate of the reactive silicon group-containing organopolysiloxane of the present invention increases, thereby giving a water-repellent film having sufficient durability in a short period of time. At a temperature of 150°C or lower, modification and thermal decomposition of the reactive silicon group-containing organopolysiloxane of the present invention can be inhibited.

The film thickness of the water-repellent film is not limited, and is preferably 100 nm or less in terms of transparency and mechanical strength of the film.
In addition, as measured using a 2 L of water droplet, the water-repellent film preferably exhibits a water contact angle of 100° or greater, particularly preferably 103° or greater, and preferably exhibits a roll-off angle of 45° or lower, particularly preferably 30° or lower. Furthermore, the water-repellent film preferably exhibits a haze value of 5 or lower, more preferably 1 or lower, still more preferably 0.5 or lower.

Although the surface treatment agent of the present invention may be directly applied onto the surface of the substrate to form a water-repellent film (cured film), it is preferable that an undercoat layer, which is formed from a hydrolysis product of a silicon compound having a hydrolyzable group other than the reactive silicon group-containing organopolysiloxane of the present invention, be provided between the surface of the substrate and the water-repellent film. With such an undercoat layer, bonding between the water-repellent film and the substrate is further enhanced, thereby improving durability of the water-repellent film of the present invention.

As the organosilicon compound used for forming the undercoat layer, an isocyanate silane compound represented by the following formula (8) is suitable, since it has high hydrolyzability and forms an undercoat layer on a substrate at around room temperature (5 to 35°C).
[Chem. 11]

Si(NCO)₄₋ₖ(CH₃)ₖ (8)

(In the formula, k represents 0 or 1.)

The water-repellent film formed from the surface treatment agent of the present invention described above has high water repellency, water sliding property, and durability, and therefore can be suitably used for water-repellent treatment for fiber products, and glass and vehicle bodies of transport equipment. In particular, when applied to window glass or mirrors, the water-repellent film can efficiently prevent a decrease in visibility due to adhesion of water droplets under rainy conditions.

### EXAMPLES

The present invention will be described in further detail with reference to the following Synthesis Examples, Examples, and Comparative Examples, but the present invention is not limited by the following Examples.

### [1] Synthesis of disiloxane compound

### [Synthesis Example 1] Synthesis of disiloxane compound (5)

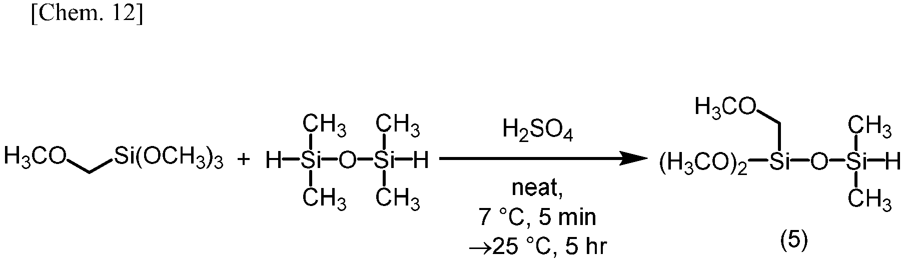

To a 300 mL separable flask equipped with a stirrer, a reflux condenser, and a thermometer were charged 200 g of trimethoxy(methoxymethyl)silane and 40.4 g of 1,1,3,3-tetramethyldisiloxane, and while stirring at 7°C, 1.2 g of concentrated sulfuric acid (98 wt%) was added dropwise thereto. After completion of the dropwise addition, the mixture was stirred at 25°C for 5 hours. Next, 6 g of KYOWAAD (registered trademark) 500SH (manufactured by Kyowa Chemical Industry Co., Ltd.) was added thereto, and then the mixture was stirred for 1 hour. Thereafter, the reaction solution was recovered by filtration and subjected to distillation (distillation temperature: 90°C, vacuum: 17 kPa), thereby obtaining the disiloxane compound (5).
¹H-NMR (CDCl₃): δ 4.46 to 4.61 ppm (s, 1H, -SiH), 3.41 to 3.34 ppm (s, 9H, -Si(OCH₃)₂, -OCH₃), 3.15 to 3.13 ppm (s, 2H, -CH₂-), 0.00 to 0.02 ppm (s, 6H, -SiCH₃)

### [2] Synthesis of reactive silicon group-containing organopolysiloxane

### [Example 1-1] Synthesis of reactive silicon group-containing organopolysiloxane a

To a 2000 mL separable flask equipped with a stirrer, a thermometer, and a dimroth condenser were charged 403 g of hexamethylcyclotrisiloxane, 120 g of acetonitrile, and 18 g of trimethylsilanol. While stirring at 60°C, 0.14 g of the compound represented by the following structural formula (9) was added thereto, and furthermore, the mixture was allowed to react at 60°C for 2 hours. Subsequently, while stirring at 50°C, 180 g of vinyltrimethoxysilane and 4 g of t-butylamine were added thereto, and the mixture was allowed to react for 5 hours. After completion of the reaction, the solvent was removed by distillation at 120°C under a vacuum of 1.3 kPa for 3 hours, thereby obtaining a one-terminal alkenyl group-containing linear organopolysiloxane (10).

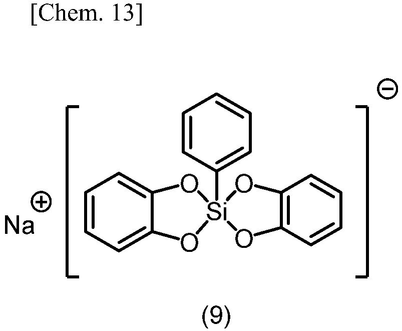

Subsequently, 136 g of the one-terminal alkenyl group-containing linear organopolysiloxane (10) and a toluene solution of a platinum-1,3-divinyl-1,1,3,3-tetramethyldisiloxane complex (50 ppm by weight as platinum) were charged to a 200 mL separable flask equipped with a stirrer, a thermometer, an ester adapter, and a dimroth condenser. Next, while stirring at 60°C, 68.3 g of the disiloxane compound (5) was added dropwise thereto, and furthermore, the mixture was allowed to react at 60°C for 3 hours. The reaction was terminated after it was confirmed by ¹H-NMR measurement that the peak derived from the vinyl groups of the starting material had completely disappeared and that a peak derived from the target product was detected. After completion of the reaction, the solvent was removed by distillation at 100°C under a vacuum of 1.3 kPa for 3 hours, thereby obtaining a reactive silicon group-containing organopolysiloxane a.

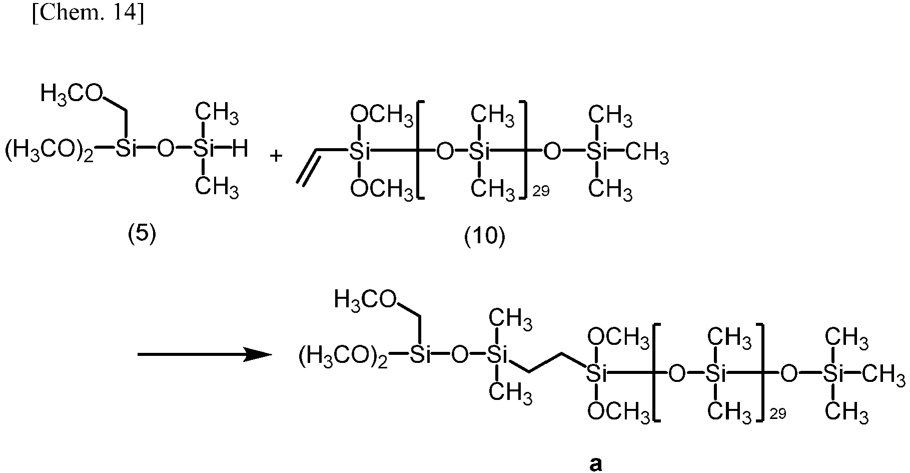

### [Example 1-2] Synthesis of reactive silicon group-containing organopolysiloxane b

To a 2000 mL separable flask equipped with a stirrer, a thermometer, and a dimroth condenser were charged 443 g of hexamethylcyclotrisiloxane, 148 g of acetonitrile, and 20 g of trimethylsilanol. While stirring at 60°C, 0.16 g of the compound represented by the above structural formula (9) was added thereto, and furthermore, the mixture was allowed to react at 60°C for 2 hours. Subsequently, while stirring at 50°C, 311 g of 7-octenyltrimethoxysilane and 5 g of t-butylamine were added thereto, and the mixture was allowed to react for 5 hours. After completion of the reaction, the solvent was removed by distillation at 120°C under a vacuum of 1.3 kPa for 3 hours, thereby obtaining a one-terminal alkenyl group-containing linear organopolysiloxane (11).

Subsequently, 163 g of the one-terminal alkenyl group-containing linear organopolysiloxane (11) and a toluene solution of a platinum-1,3-divinyl-1,1,3,3-tetramethyldisiloxane complex (50 ppm by weight as platinum) were charged to a 200 mL separable flask equipped with a stirrer, a thermometer, an ester adapter, and a dimroth condenser. Next, while stirring at 60°C, 82.8 g of the disiloxane compound (5) was added dropwise thereto, and furthermore, the mixture was allowed to react at 60°C for 3 hours. The reaction was terminated after it was confirmed by ¹H-NMR measurement that the peak derived from the vinyl groups of the starting material had completely disappeared and that a peak derived from the target product was detected. After completion of the reaction, the solvent was removed by distillation at 100°C under a vacuum of 1.3 kPa for 3 hours, thereby obtaining a reactive silicon group-containing organopolysiloxane b.

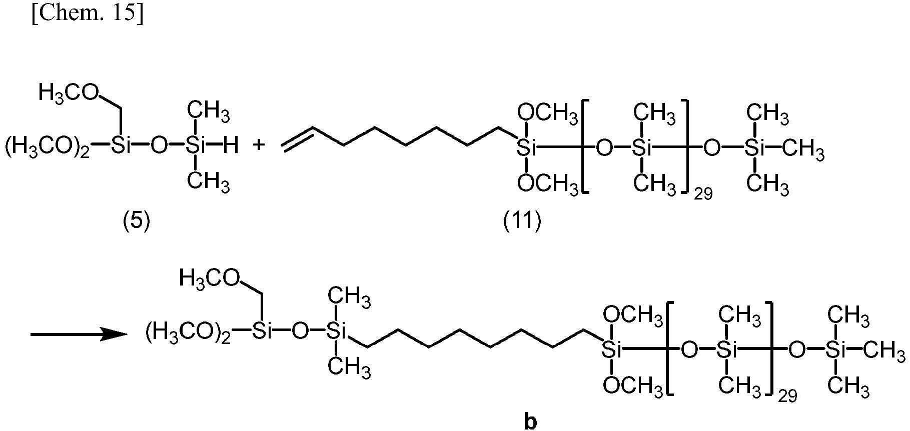

### [Example 1-3] Synthesis of reactive silicon group-containing organopolysiloxane c

To a 2000 mL separable flask equipped with a stirrer, a thermometer, and a dimroth condenser were charged 443 g of hexamethylcyclotrisiloxane, 148 g of acetonitrile, and 20 g of trimethylsilanol. While stirring at 60°C, 0.16 g of the compound represented by the above structural formula (9) was added thereto, and furthermore, the mixture was allowed to react at 60°C for 2 hours. Subsequently, while stirring at 50°C, 300 g of p-styryltrimethylsilane and 5 g of t-butylamine were added thereto, and the mixture was allowed to react for 5 hours. After completion of the reaction, the solvent was removed by distillation at 120°C under a vacuum of 1.3 kPa for 3 hours, thereby obtaining a one-terminal alkenyl group-containing linear organopolysiloxane (12).

Subsequently, 157.5 g of the one-terminal alkenyl group-containing linear organopolysiloxane (12) and a toluene solution of a platinum-1,3-divinyl-1,1,3,3-tetramethyldisiloxane complex (50 ppm by weight as platinum) were charged to a 200 mL separable flask equipped with a stirrer, a thermometer, an ester adapter, and a dimroth condenser. Next, while stirring at 60°C, 72.4 g of the disiloxane compound (5) was added dropwise thereto, and furthermore, the mixture was allowed to react at 60°C for 3 hours. The reaction was terminated after it was confirmed by ¹H-NMR measurement that the peak derived from the vinyl groups of the starting material had completely disappeared and that a peak derived from the target product was detected. After completion of the reaction, the solvent was removed by distillation at 100°C under a vacuum of 1.3 kPa for 3 hours, thereby obtaining a reactive silicon group-containing organopolysiloxane c.

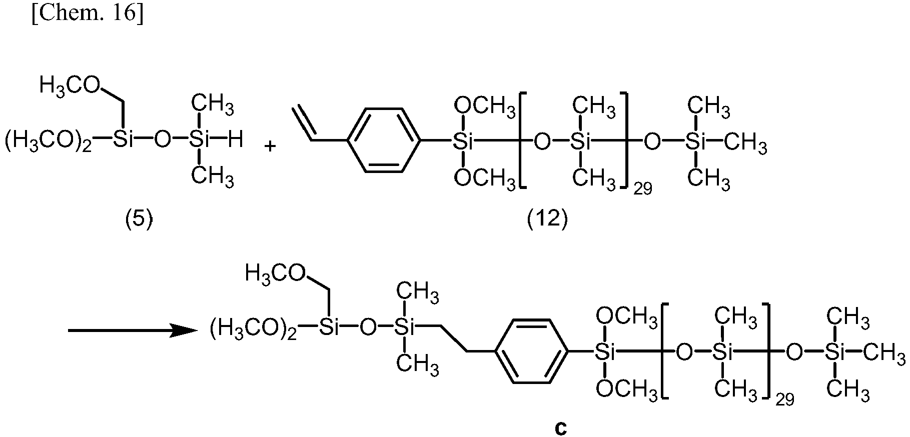

### [Example 1-4] Synthesis of reactive silicon group-containing organopolysiloxane d

To a 2000 mL separable flask equipped with a stirrer, a thermometer, and a dimroth condenser were charged 443 g of hexamethylcyclotrisiloxane, 148 g of acetonitrile, and 20 g of trimethylsilanol. While stirring at 60°C, 0.16 g of the compound represented by the above structural formula (9) was added thereto, and furthermore, the mixture was allowed to react at 60°C for 2 hours. Subsequently, while stirring at 50°C, 113 g of trimethoxy(methoxymethyl)silane and 5 g of t-butylamine were added thereto, and the mixture was allowed to react for 5 hours. After completion of the reaction, the solvent was removed by distillation at 120°C under a vacuum of 1.3 kPa for 3 hours, thereby obtaining a reactive silicon group-containing organopolysiloxane d.

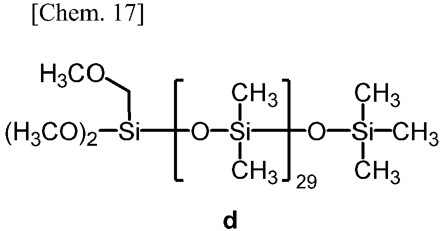

### [2] Preparation of surface treatment agent

### [Example 2-1]

To 19.0 g of ethyl acetate were added 0.920 g of the reactive silicon group-containing organopolysiloxane a obtained in Example 1-1 and 0.080 g of 98 wt% sulfuric acid, followed by mixing, thereby obtaining a surface treatment agent.

### [Example 2-2]

A surface treatment agent was obtained in the same manner as in Example 2-1, except that the reactive silicon group-containing organopolysiloxane a was replaced with the reactive silicon group-containing organopolysiloxane b obtained in Example 1-2.

### [Example 2-3]

A surface treatment agent was obtained in the same manner as in Example 2-1, except that the reactive silicon group-containing organopolysiloxane a was replaced with the reactive silicon group-containing organopolysiloxane c obtained in Example 1-3.

### [Example 2-4]

A surface treatment agent was obtained in the same manner as in Example 2-1, except that the reactive silicon group-containing organopolysiloxane a was replaced with the reactive silicon group-containing organopolysiloxane d obtained in Example 1-4.

### [Comparative Example 2-1]

A surface treatment agent was obtained in the same manner as in Example 2-1, except that the one-terminal alkenyl group-containing linear organopolysiloxane a was replaced with the organopolysiloxane e represented by the following formula.

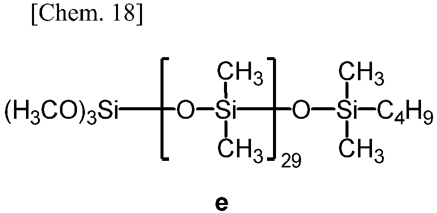

Tissue paper was impregnated with each of the surface treatment agents prepared in the Examples 2-1 to 2-4 and Comparative Example 2-1, and a glass substrate was wipe-coated therewith. After natural drying for 1 minute, tissue paper was impregnated with water, and the coated surface of the glass substrate was wiped therewith. The substrate was naturally dried at 25°C for 1 hour, thereby obtaining a glass substrate having a water-repellent film. The resulting glass substrate having the water-repellent film was subjected to the following evaluation tests (1) to (4). The results are shown in Table 1. Note that the water contact angle and the water-droplet sliding angle (roll-off angle) were measured with a contact angle meter equipped with a sliding unit (DropMaster DM-701, manufactured by Kyowa Interface Science Co., Ltd.).

### (1) Water repellency

A 2 µL droplet of water was dropped onto the treated surface of the glass substrate having the water-repellent film, and the water contact angle was measured.

### (2) Water sliding property

A 2 µL droplet of water was dropped onto the treated surface of the glass substrate having the water-repellent film, and the roll-off angle was measured.

### (3) Ultrasonic cleaning test

The glass substrate having the water-repellent film was immersed in a 1 wt% aqueous solution of a surfactant (Lipon F, manufactured by Lion hygiene Corporation), and exposed to ultrasonic waves (100 W, 42 kHz) for 30 minutes. Water repellency and water sliding property of the glass substrate having the water-repellent film after the test were evaluated by the same procedures as in (1) and (2).

### (4) Abrasion test

An abrasion test was performed under the following conditions. A piece of flannel cloth having a size of 2 cm × 2 cm was reciprocated 1,200 times against the treated surface of the glass substrate having the water-repellent film under a load of 1.2 kg. Water repellency and water sliding property of the glass substrate having the water-repellent film after the test were evaluated by the same procedures as in (1) and (2).

**[Table 1]**

| | Initial state | | After ultrasonic cleaning test | | After abrasion test | |
|---|---|---|---|---|---|---|
| | Water contact angle (°) | Roll-off angle (°) | Water contact angle (°) | Roll-off angle (°) | Water contact angle (°) | Roll-off angle (°) |
| Example 2-1 | 105 | 7 | 105 | 8 | 105 | 15 |
| Example 2-2 | 103 | 9 | 103 | 10 | 103 | 24 |
| Example 2-3 | 104 | 8 | 104 | 9 | 104 | 16 |
| Example 2-4 | 106 | 5 | 100 | 44 | 101 | 17 |
| Comparative Example 2-1 | 100 | 10 | 95 | 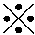 | 98 | 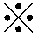 |

| | | | | | | |
|---|---|---|---|---|---|---|
| * no roll-off at 90° | | | | | | |

As shown in Table 1, it can be seen that the glass substrate having the water-repellent films obtained in Examples 2-1 to 2-4 exhibited favorable water repellency and water sliding property in the initial state, after the ultrasonic cleaning test, and after the abrasion test.

In contrast, it can be seen that the glass substrate having the water-repellent film obtained in Comparative Example 2-1 significantly deteriorated in water sliding property after the ultrasonic cleaning test and after the abrasion test.

## Claims

1. A reactive silicon group-containing organopolysiloxane comprising, per molecule, one group that is bonded to a terminal silicon atom of a linear organopolysiloxane and that is represented by the following structural formula (1): 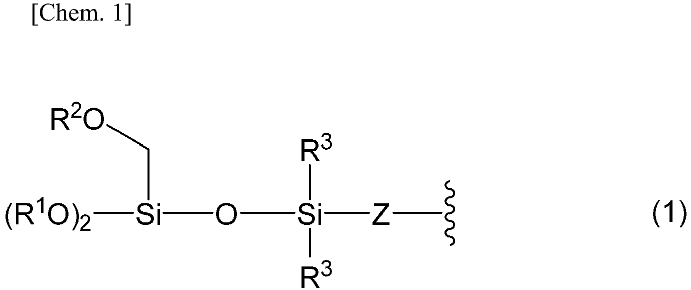 wherein R¹ and R² each independently represent a hydrogen atom, a saturated aliphatic hydrocarbon group having 1 to 10 carbon atoms, or an aryl group having 6 to 10 carbon atoms, each R³ independently represents a saturated aliphatic hydrocarbon group having 1 to 10 carbon atoms or an aryl group having 6 to 10 carbon atoms, Z represents an oxygen atom, an alkylene group having 2 to 12 carbon atoms, or an alkylenearylene group having 8 to 12 carbon atoms, and a line provided with a wavy line represents a bonding site.

2. The reactive silicon group-containing organopolysiloxane according to claim 1, being represented by the following formula (2): 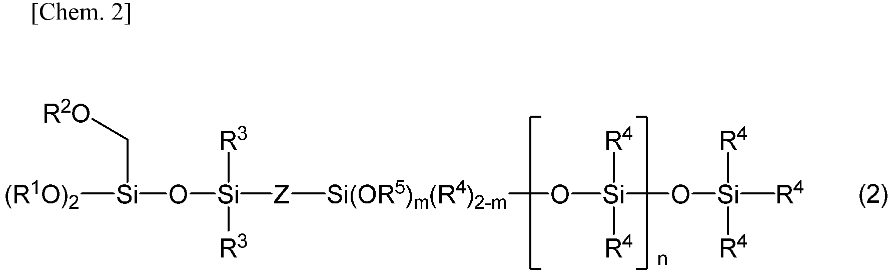 wherein each R⁴ independently represents a saturated aliphatic hydrocarbon group having 1 to 10 carbon atoms or an aryl group having 6 to 10 carbon atoms, each R⁵ independently represents a hydrogen atom, a saturated aliphatic hydrocarbon group having 1 to 10 carbon atoms, or an aryl group having 6 to 10 carbon atoms, R¹, R², R³, and Z are as defined above, m is an integer of 0 to 2, and n is an integer of 1 to 100.

3. A surface treatment agent comprising the reactive silicon group-containing organopolysiloxane according to claim 1 or 2, a hydrolytic condensate of the organopolysiloxane, or both the organopolysiloxane and the hydrolytic condensate.

4. The surface treatment agent according to claim 3, further comprising an acid catalyst.

5. An article comprising the surface treatment agent according to claim 3 adhered thereto.
